# EUROPÄISCHE PATENTSCHRIFT

(11) **EP 1 660 830 B1**
(45) Veröffentlichungstag und Bekanntmachung des Hinweises auf die Patenterteilung: **31.03.2010**
(21) Anmeldenummer: 04764618.7
(22) Anmeldetag: 30.08.2004
(51) Int. Cl.: F25D 27/00

(54) **KÄLTEGERÄT MIT OLED-INNENBELEUCHTUNG**
REFRIGERATING APPLIANCE COMPRISING AN INTERNAL OLED LIGHTING SYSTEM
APPAREIL FRIGORIFIQUE COMPORTANT UN SYSTEME D'ECLAIRAGE INTERIEUR A DIODES ELECTROLUMINESCENTES ORGANIQUES

(30) Priorität: 29.08.2003 DE 10339904
(43) Veröffentlichungstag der Anmeldung: 31.05.2006
(73) Patentinhaber: BSH Bosch und Siemens Hausgeräte GmbH, 81739 München (DE)
(72) Erfinder: BAUER, Peter, 81827 München (DE); HELL, Erich, 89537 Giengen (DE); HÄGELE, Fritz, 89542 Herbrechtingen (DE)
(86) Internationale Anmeldenummer: PCT/EP2004/009651
(87) Internationale Veröffentlichungsnummer: WO 2005/024323

(56) Entgegenhaltungen:
- EP-A- 1 076 215
- DE-A- 10 117 105
- US-A1- 2002 180 671
- US-A1- 2003 072 147

## Beschreibung

Die vorliegende Erfindung betrifft ein Kältegerät mit einer Innenraumbeleuchtung.

Bei heutigen Kältegeräten, insbesondere bei Kühl- oder Gefriergeräten, erfolgt die Beleuchtung des Geräteinnenraums in der Regel mit einer Lampe, die als Leuchtmittel eine einzelne Glühlampe umfasst. Diese wird üblicherweise beim Öffnen und Schließen der Tür des Geräts durch einen von der Tür betätigten Schalter ein- und ausgeschaltet. Die Lampe ist an einer der Innenwände des Geräts, meist an der Deckenfläche oder einer der Seitenwände angebracht. Durch Einbauteile im Gerät, wie Tragplatten, Auszugskästen oder Türabsteller, und durch eingebrachte Lebensmittel, die als Lichtbarrieren wirken, werden große Teile des Geräts durch das von der Lampe ausgehende Licht nicht oder nur mangelhaft erreicht. Mit der obigen konventionellen Glühlampenbeleuchtung ist daher eine nur ungleichmäßige Ausleuchtung des Innenraums des Geräts möglich.

Generell wäre es jedoch denkbar, mehrere Glühlampenbeleuchtungen an verschiedenen Stellen innerhalb des Geräts anzuordnen. Dies brächte jedoch den Nachteil mit sich, dass diese zusätzlichen Raum innerhalb des Innenraums des Geräts benötigten. Dies ist jedoch ebenfalls unerwünscht, da ein möglichst großes Innenraumvolumen bei geringen äußeren Abmessungen des Geräts angestrebt wird.

Ein Kältegerät gemäß dem Oberbegriff von Anspruch 1 ist aus EP 1076215 bekannt.

Der vorliegenden Erfindung lag daher die Aufgabe zugrunde, ein Kältegerät mit einer Innenraumbeleuchtung bereitzustellen, die eine gleichmäßige Ausleuchtung des Innenraums des Geräts gewährleistet und zudem wenig Raum einnimmt.

Die Aufgabe wird gelöst mit einem Kältegerät nach Anspruch 1. Weitere vorteilhafte Ausgestaltungen des Geräts sind Gegenstand der abhängigen Ansprüche.

Demnach wird eine Kältegerät mit einem Innenraum sowie einer Innenraumbeleuchtung bereitgestellt, wobei die Innenraumbeleuchtung mindestens eine organische lichtemittierende Diode (OLED) umfasst, die den Innenraum beleuchtet.

Organische lichtemittierende Dioden können, wie nachstehend noch erläutert wird, als großflächige Lichtquellen ausgebildet werden. Somit ist es möglich, sämtliche Innenraumflächen des Geräts mit diesen OLEDs auszustatten, womit eine gleichmäßige Beleuchtung des Geräteinnenraums erzielbar ist. Einbauten in dem Gerät, wie Tragplatten, Behälter, Türabsteller oder eingebrachte Lebensmittel wirken im Vergleich zu einer konventionellen Ausleüchtung des Geräteinnenraums mit einer Glühlampen kaum mehr als Lichtbarrieren, die zu einer mangelhaften Ausleuchtung führen. Auch bei unterschiedlichen Beladungszuständen des Geräts ist eine gleichmäßige Ausleuchtung des Geräteinnenraums möglich. Zudem benötigen die OLEDs wenig Raum. Die OLEDs können als sehr flache Strukturen ausgebildet sein, die an den Innenwänden des Geräts raumsparend angeordnet werden können. Der Innenraum des Geräts kann daher vollständig für Inneneinbauten und Lebensmittel genutzt werden. Die organischen lichtemittierenden Dioden können darüber hinaus auch auf gekrümmte Flächen des Geräteinnenraums aufgebracht werden.

Die im Rahmen der vorliegenden Erfindung verwendeten organischen lichtemittierenden Dioden (OLEDs) bestehen in der Regel aus einem Substrat, einer Elektrode, einer oder einer Mehrzahl von organischen Schichten und einer Gegenelektrode. Dabei sind die genannten Bestandteile in der Regel in Form dünner Schichten ausgebildet, die in "Sandwichbauweise" aufeinander aufgeschichtet sind. Ein Beispiel eines OLED-Bauelements zur Verwendung für eine Display-Einrichtung wird in der DE 102 32 937 A1 beschrieben.

Das Substrat ist in der Regel transparent, wobei es sich besonders bevorzugt um Glas oder Quarz handelt. Auch Plastikfolien oder Glas/Plastiklaminate können als Substrat verwendet werden. Kunststoffe wie etwa Polyethylentherephthalat (PET) oder Polyethylennaphthalat (PEN) können zum Einsatz kommen.

Auf dem Substrat befindet sich in Regel als Elektrode eine elektrisch leitende transparente Schicht. Diese besteht vorzugsweise aus einem transparenten, elektrisch leitenden Oxidmaterial, wie Indium-Zinnoxid (ITO). Alternativ können auch andere transparente leitende Materialien, wie dünne Metallfilme, verwendet werden. Die transparente leitende Elektrodenschicht dient dabei vorzugsweise als Anode.

Auf der Elektrodenschicht befinden sich in der Regel eine oder mehrere Schichten organischer Stoffe, jedoch mindestens eine elektrolumineszente, d.h. Licht emittierende Schicht. Jede organische Schicht kann so konfiguriert sein, dass sie eine oder mehrere Funktionen ausführt, wie etwa Löcherinjektion, Löchertransport, Elektroneninjektion, Elektronentransport und/oder Lichtabgabe (Elektrolumineszenz). Es kann sich jedoch auch um eine einfache Zwischenschicht handeln. Die organischen Schichten können aus Polymeren, Oligomeren oder kleinen funktionellen Molekülen bestehen.

Auf den organischen Schichten befinden sich als Gegenelektrode in der Regel schließlich eine oder mehrere Schichten leitender Materialien, vorzugsweise Metalle oder Metalllegierungen. Die Gegenelektrode dient dabei in der Regel als Kathode. Die Gegenelektrode ist vorzugsweise aus zwei Schichten aufgebaut: einer Unterschicht, die aus einem Metall mit einer niedrigen Austrittsarbeit ausgebildet ist, wie Ca, Mg, Ba oder Li, und einer abdeckenden Schicht aus einem gegenüber Luft stabileren Metall mit einer hohen Austrittsarbeit, wie Ag oder Al.

Der Dickewert jeder Schicht, welche die OLED umfasst, kann im Bereich zwischen etwa 10 Nanometern und 20 Mikrometern liegen und liegt üblicherweise im Bereich zwischen 50 Nanometern und 20 Mikrometern.

Bei Betrieb wird eine Spannung zwischen der Elektrode und der Gegenelektrode angelegt, Ladungsträger werden in die organischen Schichten injiziert, eine Rekombination findet statt und ein Teil der Rekombinationsenergie verlässt die OLED als Photonen. Die Photonen treten durch die transparente Elektrodenschicht und das transparente Substrat hindurch und sind als emittiertes Licht sichtbar.

Die OLEDs sind vorzugsweise durch eine Verkapselung geschützt, da sowohl die organischen Schichten wie auch einige Elektrodenmaterialien sehr empfindlich auf Oxidation durch Sauerstoff und Feuchtigkeit reagieren.

Die mindestens eine organische lichtemittierende Diode kann bei dem erfindungsgemäßen Kältegerät an einer Innenwand des Geräts oder an einem im Gerät befindlichen Einbauteil, wie einer Tragplatte, einer Schale oder einem Türabsteller, angebracht sein. In diesem Fall bildet die OLED ein von der Innenwand des Kältegeräts oder dem Einbauteil im Gerät separates Bauteil, das vorzugsweise durch Aufkleben, Verschrauben, Verrasten etc. an der Innenwand oder dem Einbauteil montiert ist. Vorteil dieser Ausgestaltung ist, dass die OLED auf einfache Weise montiert werden kann. Zudem ist sie auch leicht wieder entfernbar oder austauschbar, beispielsweise im Fall, dass ein Defekt an der OLED auftreten sollte.

Eine weitere alternative Ausgestaltung der Erfindung sieht vor, dass die OLED in einer der Innenwände des Geräts integriert ist. In der Regel weisen Kältegeräte ein Gehäuse mit mindestens einem mit einem Isoliermaterial gefüllten Hohlraum auf. Bei der in der Innenwand des Geräts integrierten Bauweise bildet nun die mindestens eine OLED eine dem Innenraum des Geräts zugewandte Wand dieses Hohlraums, in der Regel also einen Teil oder eine ganze Innenwand des Geräts. Zusätzlich oder alternativ können eine oder mehrere OLEDs in den Wandungen eines im Gerät befindlichen Einbauteils, wie einer Tragplatte, einer Schale oder einem Türabsteller integriert sein. Die integrierte Bauweise von OLEDs bringt unter anderem den Vorteil mit sich, dass die organischen lichtemittierenden Dioden vor mechanischen und chemischen Einflüssen geschützt sind.

Das erfindungsgemäße Kältegerät kann mit mehreren organischen lichtemittierenden Dioden ausgestattet sein. Dabei können sich in dem Gerät sowohl OLEDs befinden, die auf Innenwänden des Geräts oder Wandungen von Einbauteilen als separate Bauteile aufgebracht, als auch OLEDs, die wie vorstehend beschrieben in den Wänden oder Wandungen integriert sind.

Über elektrische Kontakte, die sich vorzugsweise an der betreffenden Innenwand oder dem betreffenden Einbauteil befinden, kann die OLED mit Strom versorgt werden. Dabei reicht eine Versorgung mit Niederspannung in der Regel aus. Falls die OLED in einer der Innenwände des Kältegeräts integriert ist, kann die Stromversorgung in vorteilhafter Weise innerhalb dieser Innenwand erfolgen. Ist die OLED beispielsweise auf einer der im Gerät befindlichen Tragplatten oder Türabsteller montiert oder in deren Wandungen integriert, so kann die Stromversorgung über Kontakte an den jeweiligen an den Innenwänden befindlichen Einhänge-, Einschub- oder Auflageelementen, auf denen die Tragplatten oder Türabsteller gehalten sind, erfolgen.

Im Rahmen der vorliegenden Erfindung bilden ein oder mehrere OLEDs vorzugsweise eine Leuchtfläche, die mindestens 20%, insbesondere mindestens 50%, der Innenwand des Geräts und/oder der Unterseite oder Oberseite einer im Innenraum des Geräts befindlichen Tragplatte ausfüllt. Somit können einzelne ausgesuchte Bereiche dieser Flächen beleuchtet werden. Besonders bevorzugt füllt die OLED bzw. füllen die OLEDs mindestens eine Innenwand des Geräts und/oder mindestens eine Unterseite oder Oberseite einer im Gerät befindlichen Tragplatte vollständig aus.

Die Leuchtfläche der OLED befindet sich vorzugsweise an einer der folgenden Innenwände des Geräts: der Rückwand, einer der Seitenwände, der Bodenfläche, der Deckenfläche oder der Türinnenwand. Vorzugsweise befinden sich in dem Kältegerät mehrere OLEDs an verschiedenen Innenwänden. Vorteilhaft ist beispielsweise eine Innenbeleuchtung, bei der OLEDs die Rückwand und die beiden Seitenwände des Innenraums des Geräts vollständig ausfüllen. Eine besonders gute Ausleuchtung des Innenraums wird erzielt, wenn zusätzlich auch die Deckenfläche mit OLEDs ausgefüllt ist.

Als Substrat für die OLED wird vorzugsweise eine transparente Platte verwendet. Vorzugsweise handelt es sich bei der transparenten Platte um eine Glas- oder Kunststoffplatte, die dem Innenraum des Geräts direkt zugewandt ist. Dahinter befinden sich, vom Innenraum des Gerätes abgewandt und daher geschützt, die weiteren die OLED bildenden Materialschichten, wie eine Elektrode, eine oder mehrere Schichten organischer Materialien und eine Gegenelektrode. Im Falle einer integrierten Bauweise der OLED in einer der Innenwände des Kältegeräts könnte nach der Gegenelektrode direkt ein Isoliermaterial und dann die Außenwand des Kältegeräts folgen. Glasplatten als Substrate besitzen den Vorteil, dass sie das Leuchtmaterial der OLEDs wirksam vor Sauerstoff und Feuchtigkeit schützen und dass sie keine bedenklichen Verunreinigungen an in dem Kältegerät gelagerte Lebensmittel abgeben.

Im Rahmen der vorliegenden Erfindung können die OLEDs, wie es bei den Innenwänden des Kältegeräts der Fall ist, derart angeordnet werden, dass sie Licht in eine Richtung abstrahlen. Bei Tragplatten oder anderen Einbauteilen kann es jedoch vorteilhaft sein, dass Licht von zwei entgegengesetzten Oberflächen abgestrahlt wird. Eine Ausgestaltung des erfindungsgemäßen Kältegeräts sieht daher vor, dass auf einem Einbauteil des Geräts, das entgegengesetzte Oberflächen aufweist, jeweils mindestens eine organische lichtemittierende Diode auf jeder der entgegengesetzten Oberflächen aufgebracht ist. Im Falle einer Tragplatte also auf deren Unter- und Oberseite. Bei einer integrierten Ausführung der OLEDs sind die entgegengesetzten Oberflächen vorzugsweise jeweils aus transparenten Platten, wie Glasplatten oder Kunststoffplatten, gebildet. Diese Platten können dann Substrate von OLEDs bilden, deren Materialschichten, wie Elektrodenschichten und organische Materialschichten, zwischen den Platten angeordnet sind.

Im Rahmen der vorliegenden Erfindung ist das Gehäuse des Kältegeräts vorzugsweise aus einer Mehrzahl von Gehäuseplatten gebildet, die auch die Innenwände des Geräts bilden. Diese Ausgestaltung vereinfacht die Fertigung insbesondere von Kältegeräten, bei denen eine oder mehrere OLEDs in mindestens einer der vorzugsweise eben ausgeführten Gehäuseplatten integriert sind. Die Gehäuseplatten können in diesem Fall separat voneinander mit den OLEDs versehen werden und anschließend zu dem Kältegerätgehäuse zusammengesetzt werden. Ebene Gehäuseplatten erleichtern zudem das Aufbringen der Diodenmaterialschichten.

Bei dem erfindungsgemäßen Kältegerät emittieren die lichtemittierenden Schichten der OLEDs vorzugsweise Licht unterschiedlicher Farbspektren. Damit kann eine Innenraumbeleuchtung mit verschiednen Farbeffekten erzielt werden. Die unterschiedlichen Lichtfarben können beispielsweise dazu verwendet werden, verschiedene Temperaturzonen im Innenraum des Kältegeräts kenntlich zu machen.

Das erfindungsgemäße Kältegerät weist vorzugsweise ein Anzeigefeld und/oder Bedienpaneel auf, das mit einer oder mehreren organischen lichtemittierenden Dioden hinterleuchtet wird.

Des weiteren kann das Kältegerät ein Anzeigefeld zur Anzeige von Symbolen aufweisen, wobei die Symbole von OLEDs gebildet werden. Dabei können sich das Anzeigefeld und/oder das Bedienpaneel auch auf einer der dem Innenraum des Kältegeräts zugewandten Wände oder einem der Einbauteile des Geräts befinden und somit gleichzeitig als Innenraumbeleuchtung des Geräts dienen.

Weitere Ausgestaltungen und Vorteile der vorliegenden Erfindung werden im Folgenden anhand einer Ausführungsform der vorliegenden Erfindung erläutert. Dabei zeigen:
- Fig. 1: eine perspektivische Ansicht einer ersten Ausführungsform eines Kältegerätes 1 gemäß der vorliegenden Erfindung;
- Fig. 2: einen Querschnitt durch das Kältegerät 1 von Fig. 1 entlang des Schnittes A-A.;
- Fig. 3: einen Teilquerschnitt einer Gehäuseplatte 11 des Kältegerätes 1 von Fig. 1 und 2 in einem Ausschnitt Y;
- Fig. 4: einen Teilquerschnitt eines Türabstellers 15 in einem Ausschnitt X nach Fig. 2;
- Fig. 5: einen Teilquerschnitt durch eine Tragplatte 13 entlang der Linie B-B von Fig. 1;
- Fig. 6: eine perspektivische Ansicht einer zweiten Ausführungsform eines Kältegerätes 1 gemäß der vorliegenden Erfindung;
- Fig. 7: einen Querschnitt durch das Kältegerät 1 von Fig. 6 entlang des Schnittes C-C.;
- Fig. 8: einen Teilquerschnitt einer seitlichen Innenwand 6 des Kältegerätes 1 von Fig. 6 und 7 in einem Ausschnitt Z;
- Fig. 9: ein Anzeigefeld 50 und ein Bedienpaneel 51 des Kältegerätes 1 von Fig. 1 oder 6.

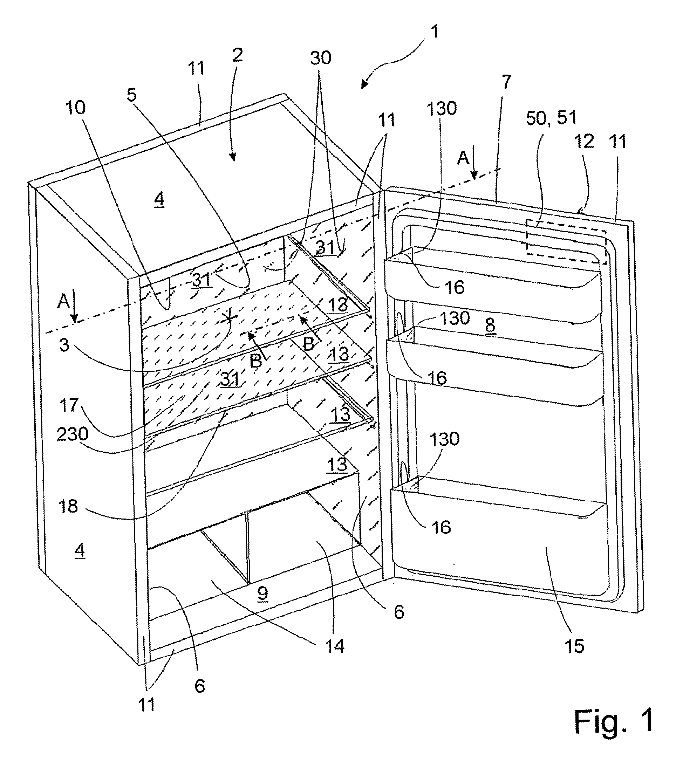

Fig. 1 zeigt eine erste Ausführungsform eines erfindungsgemäßen Kältegerätes 1, hier in Ausgestaltung eines Kühlschranks 1. Das Kältegerät 1 umfasst ein Gehäuse 2, das aus mehreren zusammengefügten Gehäuseplatten 11, insgesamt sechs, gebildet ist. Dabei bildet jede Gehäuseplatte 11 jeweils sowohl eine Innenwand 5, 6, 8, 9, 10 als auch eine Außenwand 4 des Kältegeräts 1. Das Kältegerät 1 umfasst folgende Innenwände: eine Bodenfläche 9, jeweils zwei Seitenwände 6, eine Deckenfläche 10 und eine Rückwand 5 und eine Türinnenwand 8 einer Tür 7. Das Kältegerät 1 besitzt einen Innenraum 3, der mit Tragplatten 13, Behältern 14 in Form von Auszugskästen 14 und Türabstellern 15 zum Abstellen bzw. Einstellen von Lebensmitteln ausgestattet ist.

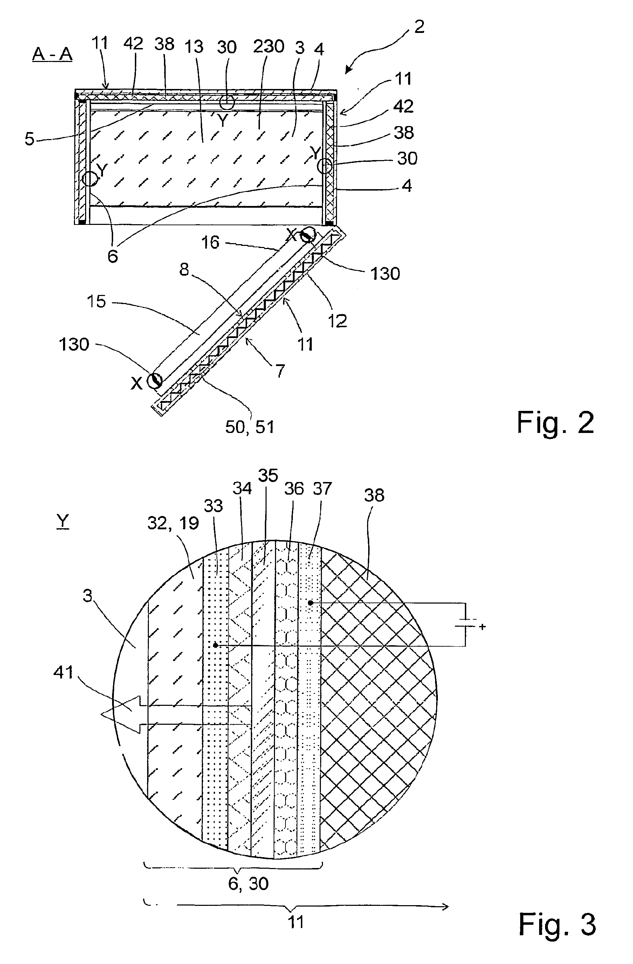

Die Rückwand 5 und die beiden Seitenwände 6 umfassen jeweils eine organische lichtemittierende Diode (OLED) 30, die zur Beleuchtung des Innenraums 3 des Kältegeräts 1 dienen. Diese sind in den entsprechenden Innenwänden 5, 6 des Kältegeräts 1 integriert, was nachfolgend in Bezug auf Fig. 3 näher erläutert wird. Die OLEDs 30 weisen, wie in Fig. 1 dargestellt, jeweils eine Leuchtfläche 31 auf, die die jeweilige Innenwand 5, 6 des Geräts 1 vollständig ausfüllt. Die OLEDs 30 können jedoch, was nicht dargestellt ist, auch nur einzelne ausgesuchte Bereiche der Innenwände 5, 6 ausfüllen. Beispielsweise können sich die OLEDs 30 auch nur über etwa mindestens 30% oder mindestens 50% der jeweiligen Flächen erstrecken. Dies hängt im wesentlichen auch von der Gestaltung und Aufteilung der Einbauteile 13, 14 und 15 im Kältegerät 1 ab. Entscheidend dafür ist auch, ob diese transparent bzw. lichtdurchlässig sind oder nicht. Zudem können auch die übrigen Innenwände des Kältegeräts, wie die Bodenfläche 9, die Deckenfläche 10 sowie die Türinnenwand 8 mit je einer oder mehreren OLEDs 30 ausgestattet sein. Auch die Beleuchtung nur einer der Innenwände 5, 6, 8, 9, 10 des Kühlgeräts mit einer oder mehren OLED 30, beispielsweise der Rückwand 5, ist denkbar.

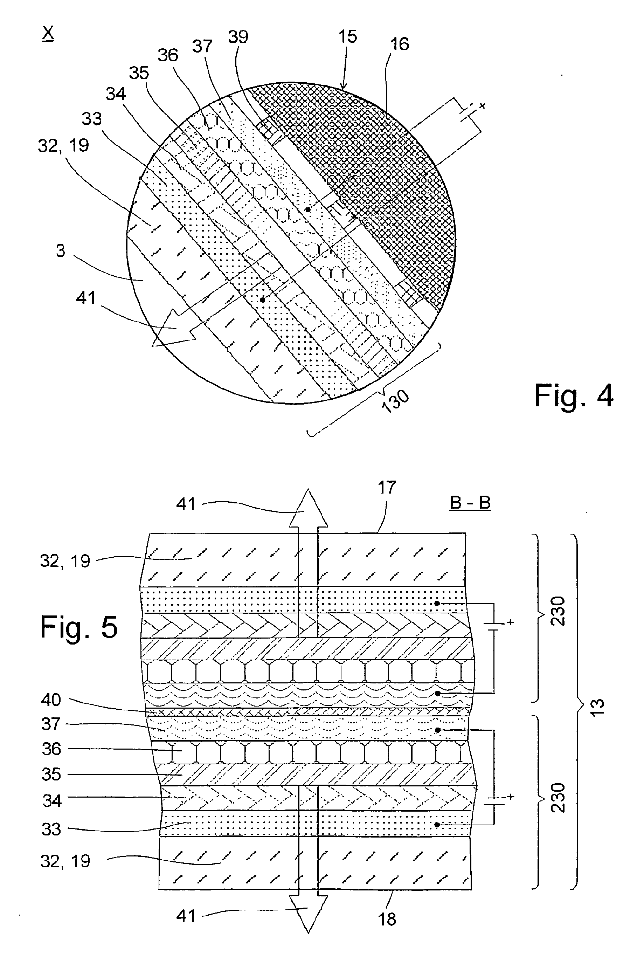

Des weiteren umfasst das Kältegerät 1 weitere organische lichtemittierende Dioden 130 an den Türabstellern 16. Hier sind die OLEDs 130 jeweils auf seitlichen Wandungen 16 der Türabsteller 15 montiert. Dabei sind die OLEDs 130 auf den Wandungen 16 beispielsweise durch Aufkleben aufgebracht. Dies wird in Bezug auf Figur 4 noch näher erläutert.

Weitere organische lichtemittierende Dioden 230 sind in einer oder mehreren der Tragplatten 13, und zwar hier in der zweitobersten Tragplatte 13, integriert. Diese Tragplatte 13 umfasst dabei an ihrer Oberseite 18 und ihrer Unterseite 19 jeweils eine OLED 230, deren Leuchtfläche 31 jeweils eine Seite 18, 19 vollständig ausfüllt. Somit wird Licht von beiden entgegengesetzten Oberflächen der Seiten 18, 19 der Tragplatte 13 emittiert. Hierdurch werden die Räume oberhalb und unterhalb dieser Tragplatte 13 verbessert ausgeleuchtet. Auf die detaillierte Ausgestaltung der OLED-beleuchteten Tragplatte 13 wird in Bezug auf Fig. 5 noch näher eingegangen. Die übrigen beiden Tragplatten 13 sind transparent.

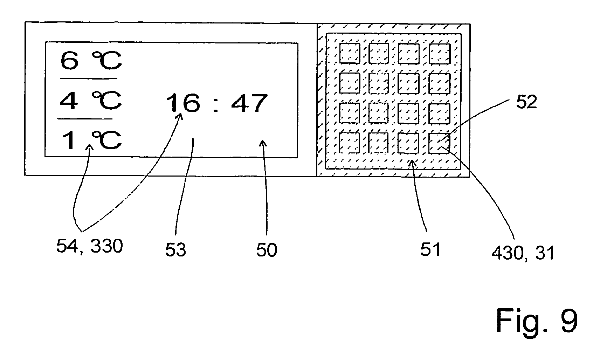

Das Kältegerät gemäß Fig. 1 weist des weiteren an seiner Tür 7 an deren Außenwand 12 ein Anzeigefeld 50 und ein Bedienpaneel 51 auf, die beide über OLEDs 330 bzw. 430 verfügen. Dies wird nachstehend zu Fig. 9 erläutert.

Die in den Innenwänden 5, 6 des Kältegeräts 1 und der Tragplatte 13 integrierten OLEDs 30 bzw. 230 sowie die an den Türabstellern 16 montierten OLEDs 130 weisen lichtemittierende Schichten mit unterschiedlichen Emissionsspektren auf. Somit können zusätzlich zur eigentlichen Beleuchtung des Innenraums 3 auch farbliche Akzente in dem Kältegerät 1 gesetzt werden. OLEDs mit unterschiedlichen Spektren, insbesondere weiße OLEDs mit unterschiedlichen Farbtemperaturen können beispielsweise zum Ausleuchten von Bereichen des Innenraums mit unterschiedlichen Lagertemperaturen eingesetzt werden, um einem Benutzer die unterschiedliche Eignung dieser Bereiche für unterschiedliche Kühlgüter intuitiv vor Augen zu führen.

Fig. 2 stellt einen Querschnitt durch das Kältegerät 1 nach Fig. 1 entlang des aus Fig. 1 ersichtlichen Schnittes A-A dar. Gleiche Bezugsziffern in beiden Figuren bezeichnen gleiche Teile. Die Gehäuseplatten 11 umfassen jeweils einen mit Isoliermaterial 38 gefüllten Hohlraum 42. Zum Innenraum 3 des Kältegeräts 1 wird der Hohlraum 42 durch eine der Innenwände 5, 6, 8 abgeschlossen. Die vom Innenraum 3 abgewandte Seite jeder Gehäuseplatte 11 ist jeweils durch eine Außenwand 4 aus Metallblech gebildet. Die Innenwände 5 und 6, d.h. die Rückwand 5 und die beiden Seitenwände 6 werden bei dieser ersten Ausführungsform des Kältegeräts durch OLEDs 30 gebildet. Dies ist in Fig. 3 für einen Ausschnitt Y einer Gehäuseplatte 11 aus Fig. 2, die die rechte Seitenwand 6 umfasst, näher dargestellt.

Demnach umfasst nach Fig. 3 die Seitenwand 6 mehrere Schichten, die in Sandwichbauweise angeordnet sind. Zum Innenraum 3 des Kältegeräts 1 hin umfasst die Seitenwand 6 zunächst eine transparente Platte 19, hier in Form einer schlagfesten Kunststoffplatte 32. Diese dient als Substrat 32 für die organische lichtemittierende Diode 30. Auf dieser Platte 32 befindet sich eine Schicht 33 aus Indium-Zinnoxid (ITO). Diese Schicht bildet eine Anode 33 der OLED 30. Als nächstes folgen mehrere Schichten 34, 35 und 36, darunter mindestens eine elektrolumineszente Schicht 35, die auch als organische Emitterschicht 35 bezeichnet wird. Bei der vorliegenden Ausführungsform ist die Schicht 34 eine Lochinjektionsschicht (Hole Injection Layer, HIL) und die Schicht 36 eine Elektronentransportschicht (Electron Transport Layer, ETL). Die Schichten 34, 35 und 36 bestehen aus Polymeren, Oligomeren oder kleinen funktionellen Molekülen. Nach diesen Schichten folgt eine Schicht 37, die die Kathode 37 bildet. Diese ist, was jedoch nicht dargestellt ist, aus zwei Metallschichten aufgebaut, einer Unterschicht, die aus einem Metall mit niedriger Austrittsarbeit, wie Ca, Mg, Ba oder Li gebildet wird, und einer abdeckenden Schicht aus einem gegenüber Luft stabileren Metall mit einer hohen Austrittsarbeit, wie Ag oder Al. Als nächstes folgt eine Schicht aus Isoliermaterial 38 und dann die aus Fig. 2 ersichtliche Außenwand 4. Der Dickewert jeder der Schichten 33, 34, 35, 36 und 37 liegt im Bereich zwischen etwa 50 Nanometern und 20 Mikrometern.

Bei Betrieb der OLED 30 nach Fig. 3 wird eine Spannung zwischen der Anode 33 und der Kathode 37 angelegt, Ladungsträger werden in die organischen Schichten 34, 35 und 36 injiziert, eine Rekombination findet statt und ein Teil der Rekombinationsenergie verlässt die OLED 130 als Photonen. Die Photonen treten durch die transparente Anode 33 und das transparente Substrat 32 hindurch und sind als emittiertes Licht 41 sichtbar. Das Anschalten der OLED-Innenraumbeleuchtung erfolgt über einen nicht dargestellten Schalter, der von der Tür 7 betätigt wird.

Zurückkehrend zu Fig. 2 weist das Kältegerät 1, wie bereits zu Fig. 1 beschrieben, jeweils zwei organische lichtemittierende Dioden 130 an den jeweils beiden seitlichen Wandungen 16 der Türabsteller 15 auf. Ein Ausschnitt X eines Türabsteller 15 mit aufgebrachter OLED 130 ist in Fig. 4 gezeigt. Der Ausschnitt X zeigt einen Querschnitt durch die OLED 30 mit einem Teil der Wandung 16 des Türabstellers 15. Die Schichten 32 bis 37 sind die gleichen wie bei der OLED 30 aus Fig. 3. Die Kathode 37 ist durch eine Klebstoffschicht 39 auf die Wandung 16 des Türabstellers 15 aufgebracht. Bei der Gestaltung gemäß Fig. 4 bildet die OLED 130 demnach ein vom dem Türabsteller 15 separates Bauteil, das auf der Wandung 16 aufgeklebt ist. Andere Mittel zum Anbringen, wie Verschrauben oder ähnliches sind ebenfalls möglich.

Fig. 5 zeigt die mit zwei OLEDs 230 ausgestattete Tragplatte 13 von Fig. 1 in einer Schnittansicht entlang der Linie B-B. Die Tragplatte 13 umfasst zwei OLEDs 230, die in der Tragplatte 13 integriert sind. Die Tragplatte 13 weist jeweils an ihrer Unterseite 18 und an ihrer Oberseite 17 eine transparente Platte 19, hier eine Glasplatte 19, auf. Die beiden Platten 19 bilden jeweils ein Substrat 32 für eine der OLEDs 230. Der Aufbau der OLEDs aus Schichten 33 bis 37 ist derselbe wie mit Bezug auf Fig. 3 beschrieben. Die zwei OLEDs 230 sind durch eine Klebschicht 40 zwischen ihren Kathoden 37 zusammengehalten. Grundsätzlich wäre auch ein Aufbau denkbar, bei dem eine einzige Kathode 37 beiden OLEDs 230 angehört. Bei Betrieb der beiden OLEDs 230 geben diese Licht 41 von den entgegengesetzten Oberflächen 17 und 18 ab.

Die Stromversorgung für die organischen lichtemittierenden Dioden 30 an den Türabstellern 15 und der Tragplatte 13 (s. Fig. 1) erfolgt über nicht dargestellte Kontakte an den Einhänge-, Einschub- bzw. Auflagestellen der Türabsteller 15 bzw. Tragplatte 13.

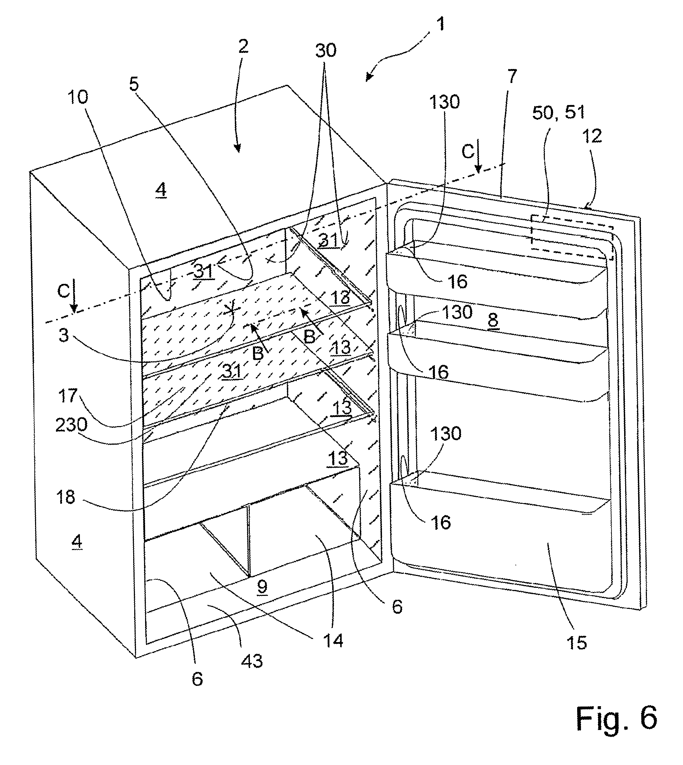

Fig. 6 zeigt eine zweite Ausführungsform eines erfindungsgemäßen Kältegeräts 1. Bei diesem Kältegerät 1 werden die Innenwände 5, 6 8, 9 und 10 im Gegensatz zu dem Kältegerät 1 nach Fig. 1 durch einen einteilig geformten Kunststoffkörper 43 gebildet. Die Rückwand 5 und die beiden Seitenwände 6 sind jeweils mit einer OLED 30 ausgestattet, wobei diese jedoch im Unterschied zu denjenigen von Fig. 1 auf die Innenwände 5, 6 aufgebracht sind. Sie stellen von den Innenwänden 5, 6 separate Bauteile dar, die beispielsweise durch Aufkleben an diesen angebracht sind.

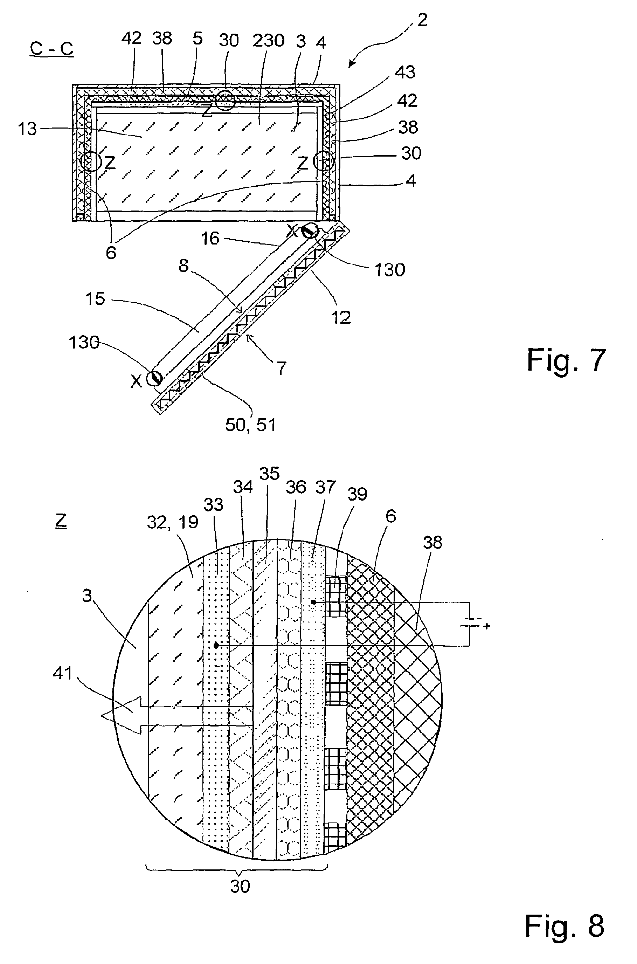

Fig. 7 zeigt im Querschnitt entlang des Schnittes C-C von Fig. 6 den detaillierten Aufbau des Kältegerätegehäuses 2. Die Außenwände 4 werden durch einzelne Metallblechplatten gebildet, die zusammengefügt sind. Die Innenwände 5, 6 sind einteilig durch den Kunststoffkörper 43 gebildet. Zwischen dem Kunststoffkörper 43 und den Außenwänden 4 befindet sich ein mit Isoliermaterial 38 gefüllter Hohlraum 42. An den Innenwänden 5, 6 ist jeweils eine OLED 30 angebracht. Wie in Fig. 1 gezeigt erstrecken sich die OLEDs 30 jeweils über die gesamte Fläche der Rückwand 5 und der beiden Seitenwände 6.

Fig. 8 stellt einen Ausschnitt Z der auf die rechte Seitenwand 6 aufgebrachten OLED 30 dar. Zunächst umfasst die OLED 30 ein Substrat 32, hier eine Glasplatte 19. Dieser folgen die weiteren OLED-Materialschichten 33 bis 37, die bereits zu Fig. 3 erläutert wurden. Mit Klebstoff 39 ist die OLED 30 auf die Seitenwand 6 aufgeklebt. Danach folgen nach außen hin das Isoliermaterial 38 und die nicht dargestellte Außenwand 4.

Fig. 9 zeigt das Anzeigefeld 50 und das Bedienpaneel 51, die an der Türaußenwand 12 des Kältegeräts 1 nach Fig. 1, 2, 6 und 7 angebracht sind. In dem Anzeigefeld 50 werden Informationen beispielsweise zur Innentemperatur des Kältegeräts 1 in Form von Symbolen 54 angezeigt. Auch die aktuelle Uhrzeit kann beispielsweise angezeigt werden. Die Symbole 54 werden von mehreren organischen lichtemittierenden Dioden 330 gebildet. Das Bedienpaneel 51 weist mehrere Tasten 52 auf, mit denen bestimmte Betriebsbedingungen des Kältegeräts, wie die Temperatur, eingegeben werden können. Jede der Tasten 52 ist dabei jeweils mit einer OLED 430 hinterleuchtet. Falls die Symbole 54 nicht selbstleuchtend ausgeführt sind, kann der Hintergrund 53 des Anzeigefelds 50 mit einer oder mehreren OLEDs hinterleuchtet werden. Die OLEDs 330 bzw. 430 können zudem lichtemittierende Schichten aufweisen, die Licht verschiedener Farbspektren emittieren. Generell ist es auch denkbar, ein Anzeigefeld 50 und/oder ein Bedienpaneel 51 der beschriebenen Form im Innenraum 3 des Kältegeräts 1 anzuordnen. Somit könnten diese zudem als Innenraumbeleuchtung dienen.

## Patentansprüche

1. Kältegerät (1), insbesondere ein Kühl- oder Gefriergerät (1), mit einem Innenraum (3) sowie einer Innenraumbeleuchtung, **dadurch gekennzeichnet, dass** die Innenraumbeleuchtung mindestens eine organische lichtemittierende Diode (OLED) (30, 130, 230) umfasst, die den Innenraum (3) beleuchtet.

2. Kältegerät (1) nach Anspruch 1, **dadurch gekennzeichnet, dass** die organische lichtemittierende Diode (OLED) (30, 130, 230) an einer Innenwand (5, 6, 8, 9, 10) des Geräts (1) oder an einem im Gerät (1) befindlichen Einbauteil (13, 14, 15), insbesondere einer Tragplatte (13), einer Schale (14) oder einem Türabsteller (15), angebracht ist.

3. Kältegerät (1) nach Anspruch 2, **dadurch gekennzeichnet, dass** das Einbauteil (13, 14, 15) des Geräts entgegengesetzte Oberflächen (17, 18), im Falle der Tragplatte eine Unterseite (18) und eine Oberseite (17), umfasst, wobei auf den entgegengesetzten Oberflächen (17, 18) jeweils mindestens eine organische lichtemittierende Diode (130, 230) aufgebracht ist.

4. Kältegerät (1) nach Anspruch 1, **dadurch gekennzeichnet, dass** das Kältegerät (1) ein Gehäuse (2) mit einem Isoliermaterial (38) gefüllten Hohlraum (42) aufweist, wobei die mindestens eine organische lichtemittierende Diode (OLED) (30) eine dem Innenraum (3) des Geräts (1) zugewandte Wand (5, 6) des Hohlraums (42) bildet.

5. Kältegerät (1) nach Anspruch 1, **dadurch gekennzeichnet, dass** die mindestens eine organische lichtemittierende Diode (OLED) (130, 230) in einem im Gerät (1) befindlichen Einbauteil (13, 14, 15), insbesondere einer Tragplatte (13), einer Schale (14) oder einem Türabsteller (15) in dessen Wandung (16) integriert ist.

6. Kältegerät (1) nach einem der Ansprüche 1 bis 4, **dadurch gekennzeichnet, dass** die mindestens eine organische lichtemittierende Diode (OLED) (30, 230) eine Leuchtfläche (31) umfasst, die mindestens 20%, insbesondere mindestens 50%, der Innenwand (5, 6, 8, 9, 10) des Geräts (1) und/oder der Unterseite (18) oder Oberseite (17) einer im Innenraum (3) des Geräts (1) befindlichen Tragplatte (13) ausfüllt.

7. Kältegerät (1) nach Anspruch 5, **dadurch gekennzeichnet, dass** die Leuchtfläche (31) der mindestens eine organische lichtemittierende Diode (OLED) (30, 230) mindestens eine Innenwand (5, 6, 8, 9, 10) des Geräts (1) und/oder mindestens eine Unterseite (18) oder Oberseite (17) einer im Gerät (1) befindlichen Tragplatte (13) vollständig ausfüllt.

8. Kältegerät (1) nach Anspruch 6 oder 7, **dadurch gekennzeichnet, dass** sich die Leuchtfläche (31) an mindestens einer der folgenden Innenwände des Geräts befindet: der Rückwand (5), einer der Seitenwände (6), der Bodenfläche (9), der Deckenfläche (10), der Türinnenwand (8).

9. Kältegerät (1) nach einem der vorangehenden Ansprüche, **dadurch gekennzeichnet, dass** das Gerät (1) ein Gehäuse (2) aufweist, das aus einer Mehrzahl von Gehäuseplatten (11) zusammengefügt ist, die auch Innenwände (5, 6, 8, 9, 10) des Geräts (1) bilden.

10. Kältegerät (1) nach Anspruch 9, **dadurch gekennzeichnet, dass** auf mindestens einer der Gehäuseplatten (11) eine oder mehrere organischen lichtemittierenden Diode (OLED) (30) aufgebracht sind bzw. in diesen integriert sind.

11. Kältegerät (1) nach einem der vorangehenden Ansprüche, **dadurch gekennzeichnet, dass** die mindestens eine organische lichtemittierende Diode (OLED) (30, 130, 230) ein Substrat (32) und darauf aufgebracht eine Elektrode (33), eine oder mehrere Schichten organischer Materialien (33, 34, 35, 36) und eine Gegenelektrode (37) aufweist, wobei es sich bei dem Substrat (32) um eine transparente Platte (19), insbesondere eine Glasplatte (19), handelt.

12. Kältegerät (1) nach Anspruch 10, **dadurch gekennzeichnet, dass** das Kältegerät (1) ein Einbauteil (13, 14, 15) mit entgegengesetzten Oberflächen (17, 18), aufweist, im Falle einer Tragplatte (13) mit einer Unterseite (18) und einer Oberseite (17), wobei die entgegengesetzten Oberflächen (17, 18) jeweils aus transparenten Platten (19) gebildet sind, die Substrate (32) von organischen lichtemittierenden Diode (OLEDs) (230) bilden, die zwischen den transparenten Platten (19) angeordnet sind.

13. Kältegerät (1) nach einem der vorangehenden Ansprüche, **dadurch gekennzeichnet, dass** die Innenraumbeleuchtung eine Mehrzahl von organischen lichtemittierenden Dioden (OLEDs) (30, 130, 230) mit Licht emittierenden Schichten (35) umfasst, die jeweils Licht unterschiedlicher Farbspektren emittieren.

14. Kältegerät (1) nach einem der vorangehenden Ansprüche, **dadurch gekennzeichnet, dass** das Gerät (1) ein Anzeigefeld (40) und/oder Bedienpaneel (41) aufweist, das mit mindestens einer organischen lichtemittierenden Diode (430) hinterleuchtet wird.

15. Kältegerät (1) nach einem der vorangehenden Ansprüche, **dadurch gekennzeichnet, dass** das Gerät (1) ein Anzeigefeld (40) zur Anzeige von Symbolen (44) aufweist, wobei die Symbole (44) von organischen lichtemittierenden Dioden (330) gebildet werden.

## Claims

1. Refrigerating appliance (1), particularly a refrigerator or freezer (1), with an interior space (3) as well as an interior space lighting means, **characterised in that** the interior space lighting means comprises at least one organic light-emitting diode (OLED) (30, 130, 230), which illuminates the interior space (2).

2. Refrigerating appliance (1) according to claim 1, **characterised in that** the organic light-emitting diode (OLED) (30, 130, 230) is mounted on an inner wall (5, 6, 8, 9, 10) of the appliance (1) or on a built-in part (13, 14, 15) disposed in the appliance (1), particularly a support plate (13), a basin (14) or a door bin (15).

3. Refrigerating appliance (1) according to claim 2, **characterised in that** the built-in part (13, 14, 15) of the appliance has opposite surfaces (17, 18), in the case of the support plate a lower side (18) and an upper side (17), wherein at least one respective organic light-emitting diode (130, 230) is mounted on each of the opposite surfaces (17, 18).

4. Refrigerating appliance (1) according to claim 1, **characterised in that** the refrigerating appliance (1) comprises a housing (2) with a cavity (42) filled with insulating material (38), wherein the at least one organic light-emitting diode (OLED) (30) forms a wall (5, 6), which faces the interior space (3) of the appliance (1), of the cavity (42).

5. Refrigerating appliance (1) according to claim 1, **characterised in that** the at least one organic light-emitting diode (OLED) (130, 230) is integrated in a built-in part (13, 14, 15), which is disposed in the appliance (1), particularly a support plate (13), a basin (14) or a door bin (15) in the wall (16) thereof.

6. Refrigerating appliance (1) according to any one of claims 1 to 4, **characterised in that** the at least one organic light-emitting diode (OLED) (30, 230) comprises a lighting surface (31) which occupies at least 20%, particularly at least 50%, of the inner wall (5, 6, 8, 9, 10) of the appliance (1) and/or of the lower side (18) or upper side (17) of a support plate (13) disposed in the interior space (3) of the appliance (1).

7. Refrigerating appliance (1) according to claim 5, **characterised in that** the lighting surface (31) of the at least one organic light-emitting diode (OLED) (30, 230) completely occupies at least one inner wall (5, 6, 8, 9, 10) of the appliance (1) and/or at least one lower side (18) or upper side (17) of a support plate (13) disposed in the appliance (1).

8. Refrigerating appliance (1) according to claim 6 or 7, **characterised in that** the lighting surface (31) is disposed at at least one of the following inner walls of the appliance: the back wall (5), one of the side walls (6), the base surface (9), the ceiling surface (10), the door inner wall (8).

9. Refrigerating appliance (1) according to any one of the preceding claims, **characterised in that** the appliance (1) comprises a housing (2) which is assembled from a plurality of housing plates (11) also forming inner walls (5, 6, 8, 9,10) of the appliance (1).

10. Refrigerating appliance (1) according to claim 9, **characterised in that** one or more organic light-emitting diodes (OLEDs) (30) are mounted on at least one of the housing plates (11) or integrated therein.

11. Refrigerating appliance (1) according to any one of the preceding claims, **characterised in that** the at least one organic light-emitting diode (OLED) (30, 130, 230) comprises a substrate (32) and - mounted thereon - an electrode (33), one or more layers of organic materials (33, 34, 35, 36) and a counter-electrode (37), wherein the substrate (32) is a transparent plate (19), particularly a glass plate (19).

12. Refrigerating appliance (1) according to claim 10, **characterised in that** the refrigerating appliance (1) comprises a built-in part (13, 14, 15) with opposite surfaces (17, 18), in the case of a support plate (13) with a lower side (18) and an upper side (17), wherein the opposite surfaces (17, 18) are respectively formed from transparent plates (19), which form substrates (32) of organic light-emitting diodes (OLEDs) (230), which are arranged between the transparent plates (19).

13. Refrigerating appliance (1) according to any one of the preceding claims, **characterised in that** the interior space lighting means comprises a plurality of organic light-emitting diodes (OLEDs) (30, 130, 230) with light emitting layers (35) which respectively emit light of different colour spectra.

14. Refrigerating appliance (1) according to any one of the preceding claims, **characterised in that** the appliance (1) comprises a display field (40) and/or control panel (41), which is or are backlit by at least one organic light-emitting diode (430).

15. Refrigerating appliance (1) according to any one of the preceding claims, **characterised in that** the appliance (1) comprises a display field (40) for display of symbols (44), wherein the symbols (44) are formed by organic light-emitting diodes (330).

## Revendications

1. Appareil frigorifique (1), notamment réfrigérateur ou congélateur (1), comprenant un espace intérieur (3) ainsi qu'un éclairage intérieur, **caractérisé en ce que** l'éclairage intérieur comprend au moins une diode électroluminescente organique (OLED) (30, 130, 230) qui éclaire l'espace intérieur (3).

2. Appareil frigorifique (1) selon la revendication 1, **caractérisé en ce que** la diode électroluminescente organique (OLED) (30, 130, 230) est placée sur une paroi intérieure (5, 6, 8, 9, 10) de l'appareil (1) ou sur une pièce incorporée (13, 14, 15) se trouvant dans l'appareil (1), notamment sur une tablette de support (13), sur un bac (14) ou sur un casier de porte (15).

3. Appareil frigorifique (1) selon la revendication 2, **caractérisé en ce que** la pièce incorporée (13, 14, 15) de l'appareil comprend des surfaces opposées (17, 18), dans le cas de la tablette de support une face inférieure (18) et une face supérieure (17), au moins une diode électroluminescente organique (OLED) (130, 230) étant respectivement placée sur les surfaces opposées (17, 18).

4. Appareil frigorifique (1) selon la revendication 1, **caractérisé en ce que** l'appareil frigorifique (1) présente un boîtier (2) muni d'une cavité (42) remplie d'une matière isolante (38), l'au moins une diode électroluminescente organique (OLED) (30) formant une paroi (5, 6), tournée vers l'espace intérieur (3) de l'appareil (1), de la cavité (42).

5. Appareil frigorifique (1) selon la revendication 1, **caractérisé en ce que** l'au moins une diode électroluminescente organique (OLED) (130, 230) est intégrée dans une pièce incorporée (13, 14, 15) se trouvant dans l'appareil (1), notamment dans une tablette de support (13), dans un bac (14) ou dans un casier de porte (15), dans la paroi (16) de celui-ci.

6. Appareil frigorifique (1) selon l'une quelconque des revendications 1 à 4, **caractérisé en ce que** l'au moins une diode électroluminescente organique (OLED) (30, 230) comprend une surface luminescente (31) qui remplit au moins 20%, notamment au moins 50%, de la paroi intérieure (5, 6, 8, 9, 10) de l'appareil (1) et/ou de la face inférieure (18) ou de la face supérieure (17) d'une tablette de support (13) se trouvant dans l'espace intérieur (3) de l'appareil (1).

7. Appareil frigorifique (1) selon la revendication 5, **caractérisé en ce que** la surface luminescente (31) de l'au moins une diode électroluminescente organique (OLED) (30, 230) remplit complètement au moins une paroi intérieure (5, 6, 8, 9, 10) de l'appareil (1) et/ou au moins une face inférieure (18) ou une face supérieure (17) d'une tablette de support (13) se trouvant dans l'appareil (1).

8. Appareil frigorifique (1) selon la revendication 6 ou 7, **caractérisé en ce que** la surface luminescente (31) se trouve sur au moins une des parois intérieures suivantes de l'appareil : sur la paroi arrière (5), sur une des parois latérales (6), sur la surface de fond (9), sur la surface de plafond (10), sur la paroi intérieure de la porte (8).

9. Appareil frigorifique (1) selon l'une quelconque des revendications précédentes, **caractérisé en ce que** l'appareil (1) présente un boîtier (2) qui se compose d'une pluralité de plaques de boîtier (11) qui forment également les parois intérieures (5, 6, 8, 9, 10) de l'appareil (1).

10. Appareil frigorifique (1) selon la revendication 9, **caractérisé en ce qu'**une ou plusieurs diodes électroluminescentes organiques (OLED) (30) sont placées sur au moins une des plaques de boîtier (11) resp. **en ce qu'**elles sont intégrées dans celles-ci.

11. Appareil frigorifique (1) selon l'une quelconque des revendications précédentes, **caractérisé en ce que** l'au moins une diode électroluminescente organique (OLED) (30, 130, 230) présente un substrat (32) et, posées dessus, une électrode (33), une ou plusieurs couches de matières organiques (33, 34, 35, 36) et une contre-électrode (37), le substrat (32) étant une plaque transparente (19), notamment une plaque en verre (19).

12. Appareil frigorifique (1) selon la revendication 10, **caractérisé en ce que** l'appareil frigorifique (1) présente une pièce incorporée (13, 14, 15) munie de surfaces opposées (17, 18), dans le cas d'une tablette de support (13), d'une face inférieure (18) et d'une face supérieure (17), les surfaces opposées (17, 18) étant respectivement formées à partir de plaques transparentes (19) qui forment les substrats (32) de diodes électroluminescentes organiques (OLED) (230), qui sont disposés entre les plaques transparentes (19).

13. Appareil frigorifique (1) selon l'une quelconque des revendications précédentes, **caractérisé en ce que** l'éclairage de l'espace intérieur comprend une pluralité de diodes électroluminescentes organiques (OLED) (30, 130, 230) dotées de couches électroluminescentes (35) qui émettent respectivement de la lumière de différents spectres de couleurs.

14. Appareil frigorifique (1) selon l'une quelconque des revendications précédentes, **caractérisé en ce que** l'appareil (1) présente un champ d'affichage (40) et/ou un tableau de commande (41) qui est éclairé en arrière-plan par au moins une diode électroluminescente organique (430).

15. Appareil frigorifique (1) selon l'une quelconque des revendications précédentes, **caractérisé en ce que** l'appareil (1) présente un champ d'affichage (40) pour l'affichage de symboles (44), les symboles (44) étant formés par des diodes électroluminescentes organiques (330).
